# EUROPÄISCHE PATENTANMELDUNG

(11) **EP 0 642 012 A1**
(43) Veröffentlichungstag der Anmeldung: **08.03.1995**
(21) Anmeldenummer: 94113301.9
(22) Anmeldetag: 25.08.1994
(51) Int. Cl.: G01N 21/59, B41F 33/00

(54) **Vorrichtung und Verfahren zur Durchführung von densitometrischen und/oder farbmetrischen Messungen**

(30) Priorität: 06.09.1993 IT BZ930037
(71) Anmelder: VIPTRONIC SrL, I-39042 Bressanone (Bolzano) (IT)
(72) Erfinder: Pallingen, Godehard, I-39042 Bressanone (Bolzano) (IT)
(74) Vertreter: Oberosler, Ludwig

(57) **Zusammenfassung**

Die Erfindung bezieht sich auf eine Vorrichtung bestehend aus einer Auflagefläche (1) für das Meßgut (7), aus einer Positioniereinrichtung (3, 4, 5, 6) gemäß dreier zueinander senkrechter Achsen (x, y, z), aus einem austauschbaren Meßkopf (9) und/oder einer Videokamera und/oder einer Lichtpunktanzeige und aus einem Computer (8) mit Tastatur (8b) und Bildschirm (8a) welcher die Programmierung der Meßstellen für die Meßköpfe (9) sowie die Analyse, die Auswertung und den Vergleich der erhobenen Meßwerte und deren graphische Darstellung ermöglicht.

## Beschreibung

Es sind verschiedene spezifische Vorrichtungen zur Durchführung von densitometrischen, bzw. farbmetrischen, Messungen an Drucken oder auf Druckplatten bekannt, diese sind so konzipiert, daß die Messungen nur nach einer einzigen Koordinate (x) sowie für eine einzige Meßart durchgeführt werden können.

Diese Vorrichtungen sind wegen ihrer spezifischen Ausrichtung und somit wegen der Tatsache, daß sie nicht für weitere Meß- oder Kontrollarten geeignet sind, im Verhältnis zu ihrer begrenzten Einsatzmöglichkeit kostspielig. Weiters erfordern diese bekannten Vorrichtungen eine perfekt ebene Auflagefläche und eine perfekte Führung des beweglichen Trägers für den Meßkopf so daß eine hohe Genauigkeit betreffend den Abstand zwischen dem Meßkopf und der zu überprüfenden Oberfläche gegeben ist, eine minimale Änderung dieses Abstandes würde Meßfehler zur Folge haben. Es sind weiters spezifische Vorrichtungen für ausschließlich densitometrische Messungen nach zwei Koordinaten (x, y) bekannt.

Die Erfindung stellt sich die Aufgabe eine Vorrichtung zu schaffen welche geeignet ist verschiedenartige Messungen und eventuell visuelle Kontrollen durchzuführen wobei Verfahren anwendbar sind welche die Programmierung der Messungen, der Positionierungen und der Qualitätskontrolle allgemein, erleichtert.

Diese Aufgabe wird erfindungsgemäß dadurch gelöst, daß die Verwendung einer an sich bekannten Positioniereinrichtung vorgeschlagen wird, welche aus Führungen, Laufwägen, Schrittmotoren besteht, die geeignet sind eine Positionierung und Wiederpositionierung von Meßköpfen und/oder einer Videokamera und/oder einer Lichtquelle für einen Lichtpunkt, gemäß drei zueinander senkrecht liegenden Achsen (x, y, z) durchzuführen von denen eine (z) senkrecht zur Auflagefläche, z.B. für ein bedrucktes Blatt oder für eine Druckplatte, verläuft.

Um die maximale Genauigkeit des Abstandes zwischen dem Meßkopf und der zu überprüfenden Oberfläche zu erreichen schlägt die Erfindung vor für die Bewegung der Meß- und/oder Kontrollorgane senkrecht (z) zur Auflagefläche ein eventuell einstellbares Abstandselement vorzusehen. Dies ermöglicht den Einsatz von weniger genau gearbeiteten Auflageflächen ohne daß dadurch die Genauigkeit der Meßdaten leidet.

Außer der Messung mittels Verstellung senkrecht zur Auflagefläche und Einsatz eines einstellbaren Abstandselementes, sieht die Erfindung den Austausch der Meßköpfe und/oder der Aufnahme- oder Kontrollorgane vor und zwar selbsttätig auf ähnliche Weise wie der Austausch der Schreibstifte an einem Plotter erfolgt oder händisch, ohne den fixen Aufbau von mehreren Meßköpfen und/oder Kontrollorganen an der selben Halterung und den Aufbau zusätzlicher, weniger oft gebrauchter, spezifischer Meßköpfe, auszuschließen.

Aufgrund dieser Merkmale der Positioniereinrichtung ist die Anbringung verschiedener Köpfe möglich welche für Messungen und/oder Kontrollen geeignet sind welche bis heute nur durch spezifisch entwickelte Vorrichtungen oder noch nicht dafür vorgesehener Vorrichtungen möglich sind.

An dem Träger für die Meßköpfe können erfindungsgemäß z.B. Meßköpfe für die Erfassung der Densität der Druckplatten, zwecks Voreinstellung der Farbzufuhr und Begrenzung des Ausschusses bei Druckbeginn, aufgebaut werden.

Natürlich sind densitometrische Messungen an den Kontrollstreifen von Drucken möglich wobei, wie bei bereits bekannten Vorrichtungen, der Vorteil besteht diese Messungen auch an mehreren Streifen und insbesondere auch an bestimmten Stellen, innerhalb der bedruckten Fläche, durchzuführen, wobei die Möglichkeit besteht diese Meßstellen exakt (gespeichert), zwecks folgender Kontrollen, "wiederzufinden". Erfindungsgemäß ist es möglich Meßköpfe für farbmetrische Messungen vorzusehen was im Falle von nicht standardisierten Farben, z.B. für Verpackungsdruck ("Hausfarben") und Flexodruck vorteilhaft ist. Es ist weiters möglich mit spezifischen Filtern ausgestattete Meßköpfe vorzusehen welche geeignet sind besondere Farben (z.B. Bronzefarbe) densitometrisch zu erfassen und/oder Meßköpfe für die Durchführung von densitometrischen Messungen an Sechsfarbendrucken (nach Küppers) vorzusehen.

Die Anbringung einer Videokamera am Träger der Positioniereinrichtung ermöglicht erfindungsgemäß die Kontrolle und Korrektur an Passermarken oder an anderen Zeichen welche geeignet sind die exakte Überdeckung der einzelnen Druckfarben zu erreichen. Diese Videokamera ermöglicht weiters eine visuelle Kontrolle an Elementen welche am Druck-Kontrollstreifen vorgesehen sind sowie auch betreffend die Auflösung an Druckplatten; Kontrollen welche bislang mittels Lupe durchgeführt werden.

Indem eine Lichtquelle für die Projektion eines Lichtpunktes auf das zu überprüfende, bedruckte Blatt oder auf die Druckplatte vorgesehen wird, ist die Programmierung der Kontrollen erleichtert, indem durch den perfekt koachsial zur optischen Achse der Meßköpfe liegende Lichtstrahl, z.B. die Bestimmung der Position der Druck-Kontrollstreifen, bzw. der einzelnen Abstufungen dieser, erleichtert wird.

Die erfindungsgemäße Vorrichtung ermöglicht überdies, da sie über eine Positioniereinrichtung verfügt welche es ermöglicht jeden beliebigen Punkt am Meßgut zu erreichen und auch exakt wiederzufinden, auch die Nachrüstung von neuartigen Meß- und/oder Kontrollorganen.

Die Erfindung wird nachfolgend anhand eines, in der beigelegten Zeichnung schematisch dargestellten, vorzuziehenden Ausführungsbeispieles einer erfindungsgemäßen Vorrichtung, näher erklärt, dabei hat die Darstellung rein erklärenden, nicht begrenzenden Zweck.

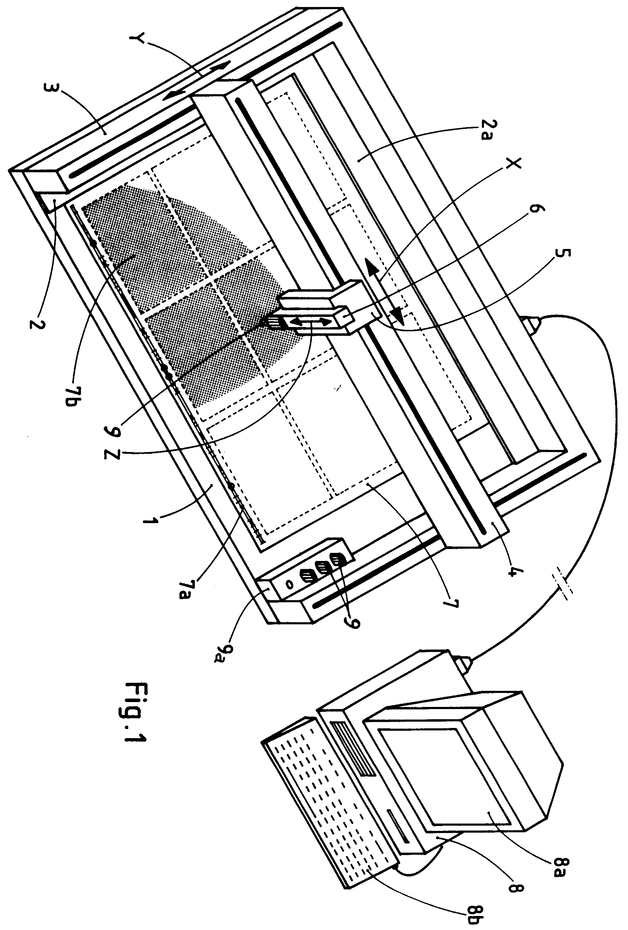

Die Fig.1 zeigt in perspektivischer Darstellung eine Positioniereinrichtung für den Aufbau von Meßköpfen und/oder einer Videokamera und/oder einer Lichtquelle für die Projektion eines Lichtpunktes, dabei ist die Einrichtung an einen Computer mit Tastatur und Bildschirm angeschlossen.

Die Auflagefläche 1 ist mit einem seitlichen Anschlag 2 und einem hinteren Anschlag 2a für das exakte Auflegen von bedruckten Blättern 7, Druckplatten oder anderen zu prüfenden Gegenständen versehen. An der Auflagefläche 1 sind Führungen 3 samt Motor und Triebwerk angebracht um die Bewegung y der Querführung 4 zu erhalten, welche ihrerseits mit Antrieb für die Bewegung x des Wagens 5 ausgerüstet ist, wobei dieser über einen Motor mit Mechanismus zwecks Verschiebung z eines Trägers für den Aufbau von Meßköpfen 9 und/oder Kontrollorganen verfügt; diese können an eigenen Haltern 9a bereitstehen und eventuell selbsttätig, wie die Schreibstifte an einem Plotter, vom Träger entnommen werden. Die Querführung 4 wird in zu den seitlichen Anschlägen 2 paralleler Richtung y verschoben während die Bewegung x des Wagens 5 parallel zum hinteren Anschlag 2a erfolgt und die Bewegung z des Trägers 6 senkrecht zu Auflagefläche 1 erfolgt.

Diese Positionierungseinrichtung ermöglicht es also, mittels geeigneter Meßköpfe und/oder Aufnahmegeräte, welche am Träger 6 angebracht sind, Messungen, visuelle Kontrollen und Anzeigen an jedem beliebigen Punkt des bedruckten Blattes 7, bzw. Druckplatten welche an der Auflageplatte 1 aufliegen, durchzuführen und zwar insbesondere an jedem Punkt der einzelnen bedruckten Flächen 7b, an einem oder mehreren Kontrollstreifen 7a, an Passermarken und dergleichen. Durch Speichern der Daten der einzelnen Meßpunkte ist es möglich die selben Messungen an den identischen Meßpunkten an folgenden Druckbättern durchzuführen. Insbesondere für die Programmierung der Meßpunkte an welchen man Messungen durchführen will kann ein Lichtpunkt dienlich sein welcher von einer am Träger 6 montierten Lichtquelle koachsial zur optischen Achse der Meßköpfe projeziert wird. Für die Übertragung der Impulse zum Computer 8 sind bereits in den Führungen 3, in der Querführung 4 und im Wagen 5 vorhandene elektrische Verbindungen, nutzbar. Der Träger 6 kann erfindungsgemäß mit einem oder mit mehreren Meßköpfen ausgestattet sein welche alle oder teilweise durch andere Meßköpfe, durch eine Videokamera und/oder durch eine Lichtquelle austauschbar sind. Erfindungsgemäß ist die Präzision gewisser Messungen (densitometrische Messungen) durch den Einsatz eines eventuell einstellbaren Distanzelementes gegeben welches bei Annäherung an die Meßoberfläche exakt den Abstand vorgibt. Dieses mechanische Abstandselement kann erfindungsgemäß durch einen elektrischen Endschalter oder durch eine elektronische Abstandsmessung ersetzt werden.

Der Wechsel der Meßköpfe 9 kann manuell durch eine Einschnappbefestigung mit den nötigen elektrischen Kontakten oder selbsttätig, durch Ablage und Entnehmung der Meßköpfe 9 von einer Halterung 9a, erfolgen.

## Patentansprüche

1. Vorrichtung für die Durchführung von Messungen und Kontrollen densitometrischer und/oder farbmetrischer und/oder visueller Art an bedruckten Blättern und oder an Druckplatten, welche aus einer Positioniereinrichtung und aus einem Computer samt Tastatur und Bildschirm besteht, dadurch gekennzeichnet, daß diese Positioniereinrichtung einen Träger (6) aufweist welcher, außer den zwei in einer gleichen Ebene liegenden, zueinander senkrechten Bewegungen (x, y), auch eine dritte Bewegung (z) senkrecht zur Auflagefläche (1) für das Meßgut (7) ausführen kann, daß diese Bewegung (z) durch eine mechanische oder elektronische, eventuell einstellbare, Abstandsvorrichtung, welche die vorgegebene Distanz zur Auflagefläche sichert und daß die am Träger (6) der Positioniervorrichtung angebrachten Meßköpfe (9) manuell oder selbsttätig austauschbar sind.

2. Vorrichtung gemäß Anspruch 1, dadurch gekennzeichnet, daß am beweglichen Träger (6) ein Meßkopf (9) zwecks spezifischer densitometrischer oder farbmetrischer Messungen angebracht sein kann und daß dieser Meßkopf manuell und/oder selbsttätig mit andersartigen Meßköpfen austauschbar ist.

3. Vorrichtung gemäß den Ansprüchen 1 und 2, dadurch gekennzeichnet, daß der Wechsel der Meßköpfe (9) mittels eigener Kupplung oder mittels, für den Wechsel der Schreibstifte an Plottern, bekannter Systeme, erfolgt.

4. Vorrichtung gemäß den Ansprüchen 1 und 2, dadurch gekennzeichnet, daß am beweglichen Träger (6) ein oder mehrere, eventuell Mehrzweck-Meßköpfe, befestigt sind von denen ein Teil austauschbar ist.

5. Vorrichtung gemäß einer der Ansprüche von 1 bis 4, dadurch gekennzeichnet, daß am beweglichen Träger (6) eine Lichtquelle zwecks Projektion eines Lichtpunktes in koachsiale Position mit der optischen Achse der Meßköpfe (9) vorgesehen ist und daß eventuelle Abweichungen von der Koachsialität durch das Meßprogramm kompensiert werden.

6. Vorrichtung gemäß einem der Ansprüche von 1 bis 5, dadurch gekennzeichnet, daß am beweglichen Träger (6) eine Videokamera befestigt ist.

7. Meßsystem dadurch gekennzeichnet, daß unter Nutzung eines Lichtpunktes gemäß Anspruch 5 eine Erleichterung sei es der Programmierungsarbeit als auch der Bestimmung der, zwecks Messungen und/oder visueller Kontrollen zu überprüfenden, Punkte oder Bereiche auf der Fläche und/oder auf den Prüfmarken des Meßgutes (7) erreicht wird.
